(19) Europäisches Patentamt / European Patent Office / Office européen des brevets

(11) **EP 3 326 965 B1**

(12) **EUROPEAN PATENT SPECIFICATION**

(45) Date of publication and mention of the grant of the patent:
**19.02.2020 Bulletin 2020/08**

(51) Int Cl.:
**C01B 32/17** *(2017.01)*     **C01B 32/162** *(2017.01)*

(21) Application number: **16830700.7**

(22) Date of filing: **24.06.2016**

(86) International application number:
**PCT/KR2016/006765**

(87) International publication number:
**WO 2017/018667 (02.02.2017 Gazette 2017/05)**

(54) **CARBON NANOTUBES HAVING IMPROVED THERMAL STABILITY**

KOHLENSTOFFNANORÖHRCHEN MIT VERBESSERTER THERMISCHER STABILITÄT

NANOTUBES DE CARBONE PRÉSENTANT UNE STABILITÉ THERMIQUE AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2015 KR 20150105028**

(43) Date of publication of application:
**30.05.2018 Bulletin 2018/22**

(73) Proprietor: **LG Chem, Ltd.**
**Seoul 07336 (KR)**

(72) Inventors:
• **KANG, Kyung Yeon**
 **Daejeon 34122 (KR)**
• **LEE, Seungyong**
 **Daejeon 34122 (KR)**
• **WOO, Jihee**
 **Daejeon 34122 (KR)**
• **JANG, Hyungsik**
 **Daejeon 34122 (KR)**
• **CHO, Dong Hyun**
 **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
WO-A1-02/064868     CN-A- 104 401 963
CN-A- 104 401 963     JP-A- 2006 306 636
JP-B2- 5 424 481     US-A1- 2010 119 436
US-A1- 2013 243 954

• BARKAUSKAS ET AL: "A novel purification method of carbon nanotubes by high-temperature treatment with tetrachloromethane", SEPARATION AND PURIFICATION TECHNOLOGY, ELSEVIER SCIENCE, AMSTERDAM, NL, vol. 71, no. 3, 10 March 2010 (2010-03-10) , pages 331-336, XP026913710, ISSN: 1383-5866, DOI: 10.1016/J.SEPPUR.2009.12.019 [retrieved on 2010-02-18]
• BARKAUSKAS, J. ET AL.: 'A Novel Purification Method of Carbon Nanotubes by High -temperature Treatment with Tetraehloromethane' SEPARATION AND PURIFICATION TECHNOLOGY vol. 71, no. 3, 2010, pages 331 - 336, XP026913710
• ZIMMERMAN, JOHN L. ET AL.: 'Gas-phase Purification of Single-wall Carbon Nanotubes' CHEMISTRY OF MATERIALS vol. 12, no. 5, 01 January 2000, pages 1361 - 1366, XP000946235 DOI: 10.1021/CM990693M

EP 3 326 965 B1

**Description**

**BACKGROUND OF THE INVENTION**

1. Field of the Invention

The present invention provides a method for preparing carbon nanotubes from which impurities are removed by reaction with a chlorine compound, achieving better thermal stability.

2. Description of the Related Art

Generally, carbon nanotubes (CNTs) refer to cylindrical carbon tubes whose diameter is from about 3 to about 150 nm, specifically from about 3 to about 100 nm, and whose length is several times, for example, at least 100 times, greater than their diameter. Such CNTs consist of layers of ordered carbon atoms and have cores with different shapes. CNTs are also called, for example, "carbon fibrils" or "hollow carbon fibers".

CNTs can be produced by general techniques, such as arc discharge, laser ablation, and chemical vapor deposition. However, arc discharge and laser ablation are not appropriate for mass production of CNTs and require high arc production costs or expensive laser equipment, which is disadvantageous from an economic viewpoint.

According to chemical vapor deposition, carbon nanostructures are typically formed by dispersing and reacting metal catalyst particles and a gaseous hydrocarbon raw material in a fluidized bed reactor at a high temperature. That is, the metal catalyst reacts with the gaseous raw material while floating in the gaseous raw material in the fluidized bed reactor and carbon nanostructures continue to grow during the reaction.

Carbon nanotubes exhibit insulating, conducting or semiconducting properties depending on their inherent chirality. Carbon nanotubes have a structure in which carbon atoms are strongly covalently bonded to each other. Due to this structure, carbon nanotubes have a tensile strength approximately 100 times that of steel, are highly flexible and elastic, and are chemically stable. Carbon nanotubes are of industrial importance in the manufacture of composites because of their size and specific physical properties. Carbon nanotubes can find widespread applications in numerous fields, including electronic materials and energy materials. For example, carbon nanotubes are applicable to secondary batteries, fuel cells, electrodes of electrochemical storage devices (e.g., supercapacitors), electromagnetic wave shields, field emission displays, and gas sensors.

However, catalytic metals used in the fabrication of carbon nanotubes are considered as impurities during subsequent use of the carbon nanotubes and deteriorate the basic physical properties (e.g., thermal stability and chemical stability) of the carbon nanotubes. Thus, there is a need for a method for producing purified carbon nanotubes with improved basic physical properties.

CN 104401963 A discloses a carbon nanotube purification method capable of removing residual metals.

WO 02/064868 A1 discloses a gas-phase process for purifying single-wall carbon nanotubes and compositions thereof.

**SUMMARY OF THE INVENTION**

The above problems are solved in accordance with the subject-matter of the independent claim. Preferred embodiments result from the sub-claims.

Described herein are carbon nanotubes whose thermal stability are greatly improved by removing a residual metal from starting carbon nanotubes. One aspect of the present invention provides a method for purifying carbon nanotubes comprising chlorinating a metal remaining in starting carbon nanotubes with a chlorine compound at a first temperature $T_1$ under vacuum and removing the chlorinated residual metal by evaporation at a second temperature $T_2$ higher than the first temperature $T_1$ wherein the oxidation initiation temperature of the purified carbon nanotubes is higher by at least 100 °C than that of the starting carbon nanotubes, wherein the first temperature is from 500 °C to 1000 °C and the second temperature is from 800 °C to 1500 °C; and the removal of the chlorinated metal by evaporation at the second temperature is effected under vacuum.

The second temperature $T_2$ may be higher by at least 300 °C than the first temperature $T_1$.

The oxidation initiation temperature of the purified carbon nanotubes may be at least 550 °C.

The content of the metal impurity remaining in the purified carbon nanotubes may be 50 ppm or less.

The starting carbon nanotubes may be prepared using a metal catalyst including cobalt (Co) and optionally at least one metal selected from iron (Fe), molybdenum (Mo), vanadium (V), and chromium (Cr).

The Co content of the purified carbon nanotubes may be 40 ppm or less.

The starting carbon nanotubes may be prepared by chemical vapor deposition (CVD) in a fluidized bed reactor.

The carbon nanotubes may have an entangled or bundle shape.

The chlorine compound may be chlorine ($Cl_2$) gas or trichloromethane ($CHCl_3$) gas.

The carbon nanotubes are produced by reacting a metal catalyst remaining after the preparation of starting carbon nanotubes with a chlorine compound under high temperature conditions and removing the chlorinated metal catalyst. According to the method of the present invention, a metal remaining in starting carbon nanotubes is treated with chlorine gas at a relatively low first temperature and the chlorinated metal is removed in a nitrogen ($N_2$) atmosphere or under vacuum at a second temperature. The method of the present invention enables the removal of the metal impurity remaining in the starting carbon nanotubes with high efficiency. In the second step, the chlorine remaining in the purified carbon nanotubes can be removed in a nitrogen ($N_2$) atmosphere or under vacuum. The carbon nanotubes prepared by the method of the present invention have improved physical properties. Particularly, improved thermal stability of the carbon nanotubes is ensured, leading to a considerable increase in the oxidative decomposition temperature of the carbon nanotubes. Due to these advantages, the carbon nanotubes of the present invention are suitable for use in flame retardant materials and metal composites.

## BRIEF DESCRIPTION OF THE DRAWINGS

Figs. 1a and 1b show SEM images of entangled type CNTs before (Preparative Example 1) and after purification (Example 1), respectively.
Figs. 1c and 1d show SEM images of bundle type CNTs before (Preparative Example 2) and after purification (Example 2), respectively.
Figs. 2a and 2b show the results of TEM-EDX analysis for carbon nanotubes produced in Comparative Example 2 and Example 2, respectively.
Fig. 3 shows the results of TGA for carbon nanotubes produced in Example 1 and Comparative Example 1.
Fig. 4 shows the results of TGA for carbon nanotubes produced in Example 2 and Comparative Example 2.

## DETAILED DESCRIPTION OF THE INVENTION

It should be understood that the terms and words used in the specification and claims are not to be construed as having common and dictionary meanings, but are construed as having meanings and concepts corresponding to the spirit of the invention in view of the principle that the inventor can define properly the concept of the terms and words in order to describe his/her invention with the best method.

The present invention will now be described in detail.

- Described herein are carbon nanotubes purified by a method including chlorinating a metal remaining in starting carbon nanotubes with a chlorine compound at a first temperature under vacuum or in an inert atmosphere and removing the chlorinated residual metal by evaporation at a second temperature higher than the first temperature wherein the oxidation initiation temperature of the purified carbon nanotubes is higher by at least 100 °C than that of the starting carbon nanotubes.

The carbon nanotubes are produced by removing residual metal derived from a metal catalyst used in the preparation of starting carbon nanotubes. To this end, the residual metal is chlorinated with a chlorine compound at a high temperature and the chlorinated metal is removed by evaporation. This purification can prevent the physical properties of the carbon nanotubes from deterioration resulting from the residual metal impurity. Particularly, the oxidation initiation temperature of the purified carbon nanotubes is higher by at least 100 °C than that of starting carbon nanotubes including the residual metal, indicating improved thermal stability of the purified carbon nanotubes. Due to these advantages, the carbon nanotubes of the present invention can be efficiently used in flame retardant materials and metal composites exposed to high temperature environments.

The first temperature is from 500 °C to 1000 °C and the second temperature is from 800 °C to 1500 °C.

The oxidation initiation temperature of the purified carbon nanotubes may be at least 550 °C.

The content of the metal impurity in the purified carbon nanotubes may be from 10- to 100-fold lower than that in the starting carbon nanotubes before purification. That is, the purified carbon nanotubes are substantially free from the residual. By taking advantage of the fact that the chlorinated metal has a lower boiling point than the metal, the purification of carbon nanotubes is based on the principle that the liquefied or gaseous chlorinated metal is completely removed by evaporation at a higher temperature. The use of the gas-phase reaction at high temperature is advantageous in that no physical damage is caused to the final carbon nanotubes.

A more detailed description will be given of the purification of carbon nanotubes.

The present invention provides a method for purifying carbon nanotubes, including chlorinating a metal remaining in starting carbon nanotubes with a chlorine compound at a first temperature under vacuum or in an inert atmosphere and removing the chlorinated residual metal by evaporation at a second temperature higher than the first temperature.

According to one embodiment, the chlorine compound may be chlorine ($Cl_2$) gas or trichloromethane ($CHCl_3$) gas. The chlorine compound causes little or no damage to the final carbon nanotubes because of its low reactivity with carbon nanotubes.

The first temperature $T_1$ at which the metal is chlorinated is from 500 °C to 1000 °C, more preferably from 700 °C to 900 °C. If the first temperature $T_1$ is lower than 500 °C, the metal impurity, such as a catalytic metal used in the preparation of the starting carbon materials, may not be sufficiently chlorinated.

After chlorination of the metal, the first temperature $T_1$ is raised to the higher temperature $T_2$. Specifically, $T_2$ may be higher by at least 300 °C than $T_1$. The second temperature is in the range of 800 °C to 1500, preferably 900 °C to 1400 °C. If the evaporation is performed at a temperature lower than 900 °C or a temperature lower than the first temperature, the chlorinated metal is not sufficiently removed, and as a result, the residual metal and the chlorinated metal may remain as impurities in the final carbon nanotubes, deteriorating the physical properties of the final carbon nanotubes. Meanwhile, if the evaporation is performed at a temperature higher than 1500 °C, catalytic graphitization occurs by the residual metal, making it difficult to remove the metal.

More complete chlorination of the residual metal can be accomplished when the first temperature is maintained for about 10 minutes to about 1 hour. The total flow rate of the chlorine compound may be controlled depending on the amount of the starting carbon nanotubes and the size of a reactor filled with the starting carbon nanotubes.

After completion of the chlorination, the chlorinated metal is removed by evaporation at the second temperature in an inert gas atmosphere or under vacuum for 30 to 300 minutes. The evaporation conditions are not limited so long as the chlorinated residual metal can be removed without affecting the carbon nanotubes. The evaporation atmosphere for the removal of the chlorinated metal may be alternately changed between vacuum and an inert gas atmosphere to further increase the removal efficiency.

The residual metal may be chlorinated under vacuum or in a nitrogen gas atmosphere. More specifically, the chlorination of the residual metal may be performed by heating a reactor or furnace filled with the starting carbon nanotubes to the first temperature under vacuum or in a nitrogen atmosphere and feeding the gaseous chlorine compound into the reactor or furnace. The residual metal is exclusively chlorinated at the first temperature and the chlorinated residual metal is removed mainly by evaporation at the second temperature. After the feeding of the chlorine compound is stopped, the internal atmosphere of the furnace or reactor is changed to a vacuum atmosphere where the residual metal is more easily removed by evaporation.

The chlorination may be performed by supplying the gaseous chlorine compound until the pressure reaches 500 torr to 900 torr, preferably 600 torr to 800 torr, more preferably 600 torr to 700 torr.

The vacuum atmosphere means a pressure of 1 torr or less and the inert gas means nitrogen ($N_2$) or argon (Ar) gas.

The second step of removing the chlorinated metal by evaporation may be carried out under vacuum or by supplying an inert gas until the pressure reaches 500 torr to 800 torr, preferably 600 to 700 torr.

The removal of the chlorinated metal and the chlorine compound by evaporation at the second temperature is effected under vacuum. The pressure may be applied in a pulsed manner. Specifically, the second step is carried out by creating a vacuum of up to 1 torr, maintaining the vacuum for a predetermined time, feeding an inert gas until the pressure reaches up to 500 torr, evacuating the inert gas, and repeating the above procedure. The second step enables the removal of the metal remaining unreacted in the first step, leading to higher purification efficiency.

The content of the metal impurity in the purified carbon nanotubes may be 50 ppm or less, as measured by ICP analysis. According to one embodiment, the starting carbon nanotubes may be prepared using a metal catalyst including cobalt (Co) and iron (Fe) as major components. After purification, the content of each major component may be decreased to 40 ppm or less and the total content may be 50 ppm or less.

The method for purifying carbon nanotubes is effective in removing a residual metal, such as a catalytic metal, while protecting carbon nanotubes against damage or cutting or preventing carbon nanotubes from being solidified into amorphous carbon materials and eliminates the need for the use of ultrasonic waves to prevent carbon nanotubes against physical damage or cutting. Therefore, the method of the present invention can provide carbon nanotubes with improved mechanical properties and physical properties, particularly greatly improved thermal stability.

The starting carbon nanotubes may be prepared by chemical vapor deposition (CVD) through decomposition of a carbon source using a supported catalyst. The use of the supported catalyst allows for growth of the starting carbon nanotubes. The catalytic metal of the supported catalyst is not especially limited so long as it promotes the growth of carbon nanotubes.

Examples of such catalytic metals include metals of Groups 3 to 12 in the 18-group type Periodic Table of the elements recommended by IUPAC in 1990. The catalytic metal is preferably selected from the group consisting of the metals of Groups 3, 5, 6, 8, 9, and 10. Particularly preferred is at least one metal selected from iron (Fe), nickel (Ni), cobalt (Co), chromium (Cr), molybdenum (Mo), tungsten (W), vanadium (V), titanium (Ti), ruthenium (Ru), rhodium (Rh), palladium (Pd), platinum (Pt), and rare earth elements. A precursor of the catalytic metal may also be used. The catalytic metal precursor is not particularly limited so long as it contains the catalytic metal. For example, the catalytic metal precursor may be an inorganic salt (e.g., a nitrate, sulfate or carbonate) of the catalytic metal, an organic salt (e.g., an acetate) of the catalytic metal, an organic complex (e.g., an acetylacetone complex) of the catalytic metal, and an organometallic compound of the catalytic metal.

It is widely known that a reaction activity is controlled by using a combination of two or more catalytic metals and catalytic metal precursor compounds, for example, a combination of at least one element selected from iron (Fe), cobalt (Co), and nickel (Ni), at least one element selected from titanium (Ti), vanadium (V), and chromium (Cr), and at least one element selected from molybdenum (Mo) and tungsten (W). Preferably, the metal catalyst includes cobalt (Co) as a major component and optionally one or more metals selected from iron (Fe), molybdenum (Mo), chromium (Cr), and vanadium (V).

Specifically, the catalyst used in the preparation of the starting carbon nanotubes may be prepared by dissolving $Co(NO_3)_2 \cdot 6H_2O$, $(NH_4)_6Mo_7O_{24} \cdot 4H_2O$, $Fe(NO_3)_2 \cdot 6H_2O$ or $Ni(NO_3)_2 \cdot 6H_2O$ as a catalytically active metal precursor in distilled water and wet impregnating the solution into a support, such as $Al_2O_3$, $SiO_2$ or MgO.

Specifically, the catalyst may be prepared by sonicating a catalytically active metal precursor and a support, such as $Al(OH)_3$, $Mg(NO_3)_2$ or colloidal silica.

Alternatively, the catalyst may be prepared by a sol-gel process. In this case, a chelating agent, such as citric acid or tartaric acid, is used to sufficiently dissolve a catalytically active metal precursor in water. Alternatively, the catalyst may be prepared by co-precipitation of readily water-soluble catalytically active metal precursors.

The starting carbon nanotubes used in the method of the present invention may be prepared by bringing the supported catalyst into contact with a carbon-containing compound in a heating zone.

The use of the supported catalyst prepared by an impregnation method is preferred for the following reasons: the supported catalyst has a higher inherent bulk density than coprecipitated catalysts; unlike coprecipitated catalysts, the supported catalyst produces a small amount of a fine powder with a size of 10 microns or less, which reduces the possibility of occurrence of a fine powder due to attrition during fluidization; and high mechanical strength of the supported catalyst effectively stabilizes the operation of a reactor.

The catalyst may use at least one aluminum-based support selected from the group consisting of $Al_2O_3$, AlO(OH), $Al(OH)_3$, and mixtures thereof. The aluminum-based support is preferably alumina ($Al_2O_3$). The aluminum (Al)-based support may further include at least one oxide selected from the group consisting of $ZrO_2$, MgO, and $SiO_2$. The aluminum (Al)-based support has a spherical or potato-like shape. The material for the aluminum (Al)-based support has a structure suitable to provide a relatively high surface area per unit weight or volume, such as a porous structure, a molecular sieve structure or a honeycomb structure.

One embodiment of the present invention provides a method for preparing a supported catalyst for CNT synthesis, including (1) mixing a support with an aqueous metal solution including a catalytic component precursor and an active component precursor to prepare an aqueous solution containing the supported catalyst precursors, (2) aging the aqueous solution containing the supported catalyst precursors and impregnating the catalytic component precursor and the active component precursor into the support to obtain a mixture, (3) drying the mixture under vacuum to coat the catalytic component and the active component on the surface of the support, and (4) calcining the vacuum-coated product.

The use of the supported catalyst allows for the growth of carbon nanotubes by chemical vapor deposition through decomposition of a carbon source, leading to the production of the carbon nanotubes.

Specifically, the chemical vapor deposition may be performed by feeding the catalyst for carbon nanotube production into a fluidized bed reactor and introducing at least one carbon source selected from $C_1$-$C_4$ saturated or unsaturated hydrocarbons, and optionally together with a mixed gas hydrogen and nitrogen, into the reactor at 500 to 900 °C. Carbon nanotubes are allowed to grow for 30 minutes to 8 hours after the carbon source is introduced into the catalyst for carbon nanotube production.

The carbon source may be a $C_1$-$C_4$ saturated or unsaturated hydrocarbon. Examples of such hydrocarbons include, but are not limited to, ethylene ($C_2H_4$), acetylene ($C_2H_2$), methane ($CH_4$), and propane ($C_3H_8$). The mixed gas of hydrogen and nitrogen transports the carbon source, prevents carbon nanotubes from burning at high temperature, and assists in the decomposition of the carbon source.

The use of the supported catalyst enables the preparation of carbon nanotubes in the form of a spherical or potato-like aggregate having a particle size distribution ($D_{cnt}$) of 0.5 to 1.0. For example, in the case where the catalyst is prepared by impregnating a catalyst component and an active component into a spherical or potato-like granular support, followed by calcination, the catalyst has a spherical or potato-like shape that is not substantially different from that of the support and a carbon nanotube aggregate grown on the catalyst also has a spherical or potato-like shape that is substantially the same as that of the support except for an increase in diameter. Herein, the spherical or potato-like shape refers to a three-dimensional shape having an aspect ratio of 1.2 or less, such as a sphere or ellipse.

The particle size distribution ($D_{cnt}$) of carbon nanotubes is defined by Expression 1:

[Expression 1]

$$D_{cnt} = [Dn_{90} - Dn_{10}]/Dn_{50}$$

where $Dn_{90}$, $Dn_{10}$, and $Dn_{50}$ are the number average particle diameters of the CNTs after standing in distilled water for 3 hours, as measured under 90%, 10%, and 50% in the absorption mode using a particle size analyzer (Microtrac), respectively.

The carbon nanotubes have a particle size distribution ($D_{cnt}$) of 0.55 to 0.95, more preferably 0.55 to 0.9.

The carbon nanotubes may be of a bundle type or non-bundle type having an aspect ratio of 0.9 to 1. Unless otherwise mentioned, the term "bundle type" used herein refers to a type of carbon nanotubes in which the carbon nanotubes are arranged in parallel or get entangled to form bundles or ropes, and the term "non-bundle or entangled type" describes a type of carbon nanotubes that does not have a specific shape such as a bundle- or rope-like shape. The CNT bundles may have a diameter of 1 to 50 $\mu$m.

The aspect ratio is defined by Expression 2:

[Expression 2]

$$Aspect\ ratio = the\ shortest\ diameter\ passing\ through\ the\ center\ of\ CNT/the\ longest\ diameter\ passing\ through\ the\ center\ of\ CNT$$

The carbon nanotubes have a bulk density of 80 to 250 kg/m$^3$. Specifically, the bulk density is defined by Expression 3:

[Expression 3]

$$Bulk\ density = CNT\ weight\ (kg)/CNT\ volume\ (m^3)$$

The present invention is characterized in that the density distribution of the carbon nanotubes is in a specific range.

The carbon nanotubes may have an average particle diameter of 100 to 800 $\mu$m and a strand diameter of 10 to 50 nm.

The metal component remains in the form of a fine powder or impurity in the carbon nanotubes with the above properties. The metal component reacts with a chlorine compound in a high-temperature atmosphere to form a metal chloride having a lower boiling point than the metal component. The metal chloride is removed by evaporation at a temperature equal to or higher than the boiling point of the metal chloride. The purified carbon nanotubes have improved physical properties, particularly improved thermal stability. Due to their improved physical properties, the purified carbon nanotubes are suitable for use in flame retardant materials and metal composites exposed to high temperature environments.

The present invention will be explained in more detail with reference to the following examples, including comparative examples. However, these examples are provided for illustrative purposes only and are not intended to limit the scope of the invention.

<Preparation of carbon nanotubes>

**Preparative Example 1: Preparation of Co-CNTs**

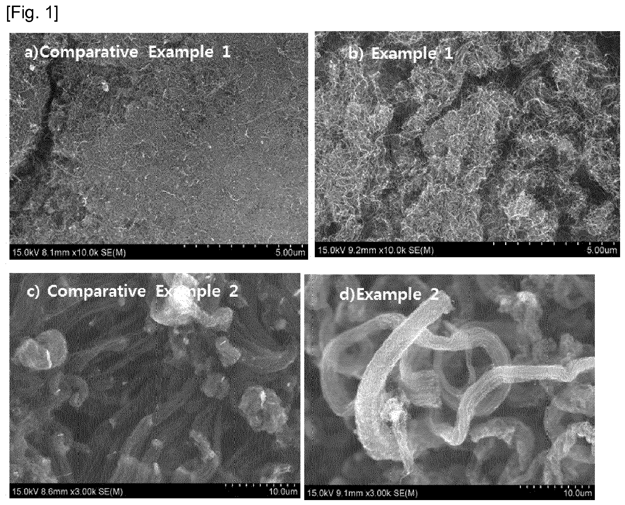

Carbon nanotubes were synthesized using a Co-containing metal catalyst in a fixed bed reactor on a laboratory scale. Specifically, the catalyst was mounted at the center of a quartz tube having a diameter of 55 mm and heated to 650 °C in a nitrogen atmosphere. Hydrogen gas was allowed to flow at a rate of 60 sccm for 2 h while maintaining the same temperature. As a result, an aggregate of entangled (non-bundle) type first carbon nanotubes was synthesized. The shape of the first carbon nanotubes is shown in Fig. 1a.

**Preparative Example 2: Preparation of Fe/Co-CNTs**

Carbon nanotubes were synthesized using a metal catalyst containing Fe and Co in a fixed bed reactor on a laboratory scale. Specifically, the catalyst was mounted at the center of a quartz tube having a diameter of 55 mm and heated to 650 °C in a nitrogen atmosphere. Hydrogen gas was allowed to flow at a rate of 60 sccm for 2 h while maintaining the same temperature. As a result, an aggregate of bundle type second carbon nanotubes was synthesized. The shape of the second carbon nanotubes is shown in Fig. 1c.

<Purification of the carbon nanotubes>

**Example 1**

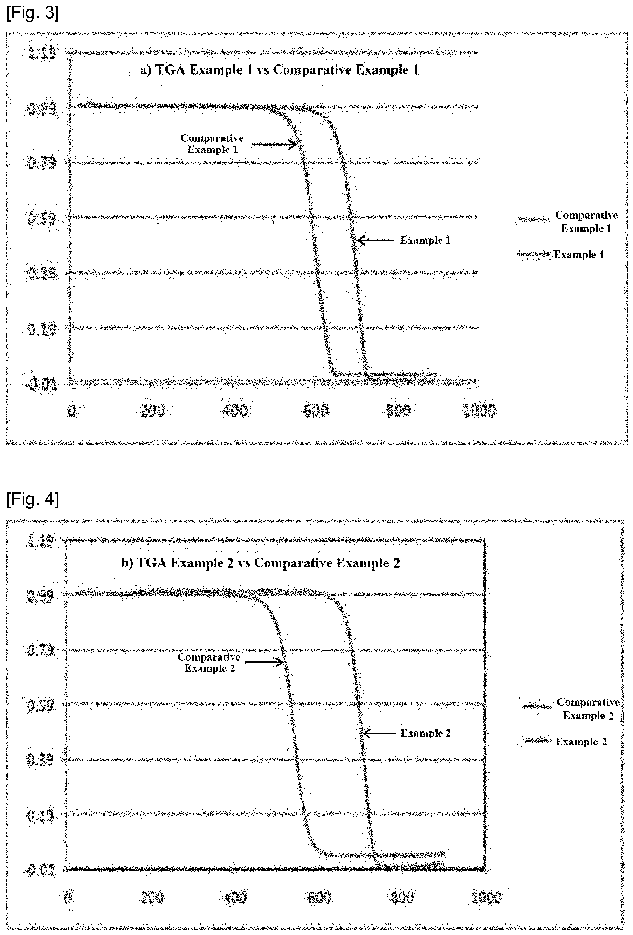

20 g of the first carbon nanotubes prepared in Preparative Example 1 were placed in a calcination furnace. The calcination furnace was evacuated to 1 torr and its internal temperature was raised to 900 °C. Next, chlorine ($Cl_2$) gas was supplied until the pressure reached 680 torr. Thereafter, the furnace was heated to 1400 °C, maintained in a vacuum atmosphere for 2 h, and cooled under vacuum.
The shape of the purified first carbon nanotubes is shown in Fig. 1b.
The purified first carbon nanotubes were heated at a rate of 5 °C/min to 900 °C in an ambient atmosphere and their oxidation initiation temperature was measured using TGA. The result is shown in Table 1. Changes in the weight of the carbon nanotubes were measured with varying temperatures. The results are shown in Figs. 3 and 4.

**Example 2**

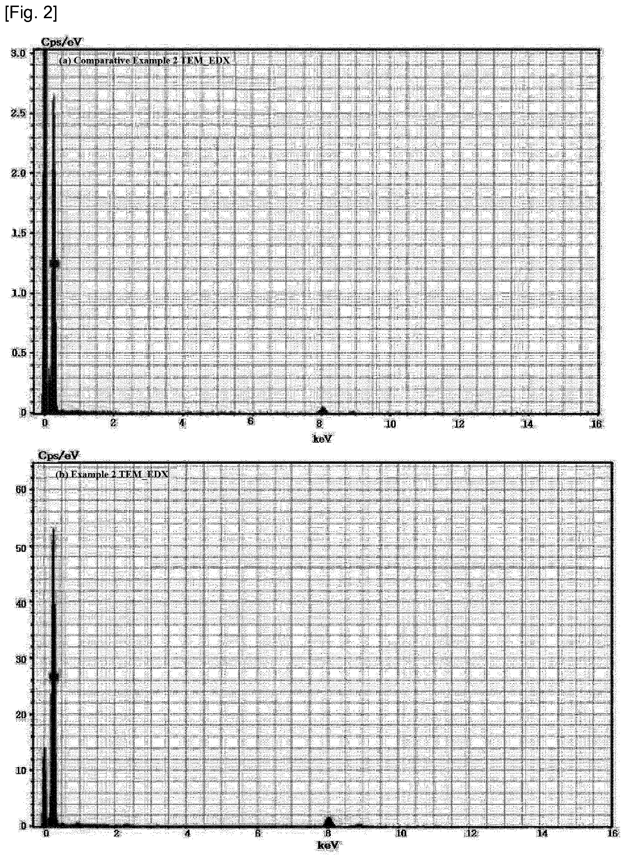

20 g of the second carbon nanotubes prepared in Preparative Example 2 were placed in a calcination furnace. The calcination furnace was evacuated to 1 torr and its internal temperature was raised to 900 °C. Next, chlorine ($Cl_2$) gas was supplied until the pressure reached 680 torr. Thereafter, the furnace was heated to 1400 °C, maintained in a vacuum atmosphere for 2 h, and cooled under vacuum.
The shape of the purified second carbon nanotubes is shown in Fig. 1d.
The constituent elements of the second carbon nanotubes before and after purification were observed by TEM-EDX. The results are shown in Fig. 2.
The purified second carbon nanotubes were heated at a rate of 5 °C/min to 900 °C in an ambient atmosphere and their oxidation initiation temperature was measured using TGA. The result is shown in Table 1. Changes in the weight of the carbon nanotubes were measured with varying temperatures. The results are shown in Fig. 3b.

**Comparative Example 1**

The first carbon nanotubes prepared in Preparative Example 1 were heated at a rate of 5 °C/min to 900 °C in an ambient atmosphere and their oxidation initiation temperature was measured using TGA. The result is shown in Table 1. Changes in the weight of the carbon nanotubes were measured with varying temperatures. The results are shown in Fig. 3.

**Comparative Example 2**

The second carbon nanotubes prepared in Preparative Example 2 were heated at a rate of 5 °C/min to 900 °C in an ambient atmosphere and their oxidation initiation temperature was measured using TGA. The result is shown in Table 1. Changes in the weight of the carbon nanotubes were measured with varying temperatures. The results are shown in Fig. 4.

[TABLE 1]

| Example No. | $Cl_2$ treatment | Major component of metal catalyst | CNT shape | Oxidation initiation temperature |
|---|---|---|---|---|
| Example 1 | ○ | Co | Entangled | 580.3 °C |
| Example 2 | ○ | FeCo | Bundle | 610.6 °C |
| Comparative Example 1 | × | Co | Entangled | 468.3 °C |
| Comparative Example 2 | × | FeCo | Bundle | 411.2 °C |

The surface elements of the unpurified carbon nanotubes prepared in Comparative Example 2 and the purified carbon nanotubes produced in Example 2 were analyzed by TEM-EDX spectroscopy. The results are shown in Fig. 2. Comparison of the peaks of Fig. 2a (Comparative Example 2) with the peaks of Fig. 2b (Example 2) reveals that no additional peaks other than the peaks of Fig. 2a were found in Fig. 2b, demonstrating that $Cl_2$ gas did not remain on the surface of the purified carbon nanotubes after the chlorine gas purification.

The contents of Fe, Co, Mo, V, and Cr present in the carbon nanotubes of Examples 1-2 and Comparative Examples 1-2 were analyzed by inductively coupled plasma (ICP) spectrometry. The results are shown in Table 2.

[TABLE 2]

| Example No. | Chlorine source | Treatment temperatures | | Reaction atmosphere | ICP (ppm) | | | | |
|---|---|---|---|---|---|---|---|---|---|
| | | $T_1$ | $T_2$ | | Fe | Co | Mo | V | Cr |
| Example 1 | $Cl_2$ | 900 | 1400 | $N_2$ | <1 | <10 | <1 | <1 | <1 |
| Example 2 | $Cl_2$ | 900 | 1400 | $N_2$ | <10 | <10 | <1 | <1 | <1 |
| Comparative Example 1 | Untreated | - | - | - | <1 | 4000 | 520 | 490 | 310 |
| Comparative Example 2 | Untreated | - | - | - | 3000 | 4250 | 500 | 480 | 300 |

While specific embodiments of the invention have been described in detail, it will be appreciated by those skilled in the art that such detailed descriptions are merely preferred embodiments and the scope of the present invention is not limited thereto. Therefore, the true scope of the present invention should be defined by the appended claims and their equivalents.

## INDUSTRIAL APPLICABILITY

The carbon nanotubes of the present invention are produced by reacting a metal catalyst remaining after the preparation of starting carbon nanotubes with a chlorine compound under high temperature conditions and removing the chlorinated metal catalyst. The method of the present invention is effective in removing the residual metal impurity to improve the physical properties of the carbon nanotubes. Particularly, improved thermal stability of the carbon nanotubes is ensured, leading to a considerable increase in the oxidative decomposition temperature of the carbon nanotubes. Due to these advantages, the carbon nanotubes of the present invention are suitable for use in flame retardant materials and metal composites.

## Claims

1. A method for purifying carbon nanotubes comprising chlorinating a metal remaining in starting carbon nanotubes with a chlorine compound at a first temperature $T_1$ under vacuum and removing the chlorinated residual metal by evaporation at a second temperature $T_2$ higher than the first temperature $T_1$ wherein the oxidation initiation temperature of the purified carbon nanotubes is higher by at least 100 °C than that of the starting carbon nanotubes, wherein the first temperature is from 500 °C to 1000 °C and the second temperature is from 800 °C to 1500 °C; and the removal of the chlorinated metal by evaporation at the second temperature is effected under vacuum.

2. The method according to claim 1, wherein the second temperature $T_2$ is higher by at least 300 °C than the first temperature $T_1$.

3. The method according to claim 1, wherein the oxidation initiation temperature of the purified carbon nanotubes is at least 550 °C.

4. The method according to claim 1, wherein the content of the metal impurity remaining in the purified carbon nanotubes is 50 ppm or less.

5. The method according to claim 1, wherein the starting carbon nanotubes are prepared using a metal catalyst comprising cobalt (Co).

6. The method according to claim 5, wherein the metal catalyst further comprises at least one metal selected from iron (Fe), molybdenum (Mo), vanadium (V), and chromium (Cr).

7. The method according to claim 5, wherein the Co content of the purified carbon nanotubes is 40 ppm or less.

8. The method according to claim 1, wherein the starting carbon nanotubes are prepared by chemical vapor deposition (CVD) in a fluidized bed reactor.

9. The method according to claim 1, wherein the carbon nanotubes have an entangled or bundle shape.

10. The method according to claim 1, wherein the chlorine compound is chlorine ($Cl_2$) gas or trichloromethane ($CHCl_3$) gas.

**Patentansprüche**

1. Verfahren zum Reinigen von Kohlenstoffnanoröhrchen, umfassend das Chlorieren eines Metalls, das in Ausgangskohlenstoffnanoröhrchen verbleibt, mit einer Chlorverbindung bei einer ersten Temperatur $T_1$ unter Vakuum und Entfernen des chlorierten verbleibenden Metalls durch Evaporieren bei einer zweiten Temperatur $T_2$, die höher ist als die erste Temperatur $T_1$, wobei die Oxidationsinitiationstemperatur der gereinigten Kohlenstoffnanoröhrchen um mindestens 100°C höher ist als die der Ausgangskohlenstoffnanoröhrchen,
   wobei die erste Temperatur von 500°C bis 1000°C ist und die zweite Temperatur von 800°C bis 1500°C ist; und das Entfernen des chlorierten Metalls durch Evaporieren bei der zweiten Temperatur unter Vakuum durchgeführt wird.

2. Verfahren nach Anspruch 1, wobei die zweite Temperatur $T_2$ um zumindest 300°C höher ist als die erste Temperatur $T_1$.

3. Verfahren nach Anspruch 1, wobei die Oxidationsinitiationstemperatur der gereinigten Kohlenstoffnanoröhrchen zumindest 550°C ist.

4. Verfahren nach Anspruch 1, wobei der Gehalt an Metallverunreinigung, die in den gereinigten Kohlenstoffnanoröhrchen verbleibt, 50 ppm oder weniger ist.

5. Verfahren nach Anspruch 1, wobei die Ausgangskohlenstoffnanoröhrchen unter Verwendung eines Metallkatalysators hergestellt werden, der Cobalt (Co) umfasst.

6. Verfahren nach Anspruch 5, wobei der Metallkatalysator ferner zumindest ein Metall umfasst, ausgewählt aus Eisen (Fe), Molybdän (Mo), Vanadium (V) und Chrom (Cr).

7. Verfahren nach Anspruch 5, wobei der Co-Gehalt der gereinigten Kohlenstoffnanoröhrchen 40 ppm oder weniger ist.

8. Verfahren nach Anspruch 1, wobei die Ausgangskohlenstoffnanoröhrchen durch chemische Gasphasenabscheidung (CVD) in einem Wirbelschichtreaktor hergestellt werden.

9. Verfahren nach Anspruch 1, wobei die Kohlenstoffnanoröhrchen eine verschränkte oder gebündelte Form haben.

10. Verfahren nach Anspruch 1, wobei die Chlorverbindung Chlor ($Cl_2$)-Gas oder Trichlormethan ($CHCl_3$)-Gas ist.

**Revendications**

1. Procédé de purification de nanotubes de carbone consistant à chlorer un métal restant dans des nanotubes de départ de carbone avec un composé de chlore à une première température sous vide $T_1$ sous vide et à retirer le métal chloré résiduel par évaporation à une deuxième température $T_2$ plus élevée que la première température $T_1$ dans lequel la température d'amorçage d'oxydation des nanotubes de carbone purifiés est plus élevée d'au moins 100°C que celle des nanotubes de départ de carbone,
dans lequel la première température est comprise entre 500°C et 1000°C et la deuxième température est comprise entre 800°C et 1500°C ; et
le retrait du métal chloré par évaporation à la deuxième température est effectué sous vide.

2. Procédé selon la revendication 1, dans lequel la deuxième température $T_2$ est plus élevée d'au moins 300°C que la première température $T_1$.

3. Procédé selon la revendication 1, dans lequel la température d'amorçage d'oxydation des nanotubes de carbone purifiés est au moins 550°C.

4. Procédé selon la revendication 1, dans lequel la teneur en impuretés de métal restant dans les nanotubes de carbone purifiés est égale ou inférieure à 50 ppm.

5. Procédé selon la revendication 1, dans lequel les nanotubes de départ de carbone sont préparés en utilisant un catalyseur métallique comprenant du cobalt (Co).

6. Procédé selon la revendication 5, dans lequel le catalyseur métallique comprend en outre un ou plusieurs métaux sélectionnés parmi le fer (Fe), le molybdène (Mo), le vanadium (V) et le chrome (Cr).

7. Procédé selon la revendication 5, dans lequel la teneur en Co des nanotubes de carbone purifiés est égale ou inférieure à 40 ppm.

8. Procédé selon la revendication 1, dans lequel les nanotubes de départ de carbone sont préparés par dépôt chimique en phase vapeur (CVD) dans un réacteur à lit fluidisé.

9. Procédé selon la revendication 1, dans lequel les nanotubes de carbone ont une forme de faisceau ou enchevêtrée.

10. Procédé selon la revendication 1, dans lequel le composé de chlore est un gaz de chlore ($Cl_2$) ou un gaz de trichlorométhane ($CHCl_3$).

[Fig. 1]

[Fig. 2]

[Fig. 3]

a) TGA Example 1 vs Comparative Example 1

[Fig. 4]

b) TGA Example 2 vs Comparative Example 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104401963 A

- WO 02064868 A1